# EUROPEAN PATENT APPLICATION

(11) **EP 2 442 231 A1**
(43) Date of publication of application: **18.04.2012**
(21) Application number: 10306057.0
(22) Date of filing: 29.09.2010
(51) Int. Cl.: G06F 13/16

(54) **Reordering arrangement**

(71) Applicant: STMicroelectronics (Grenoble 2) SAS, 38000 Grenoble (FR); STMicroelectronics S.r.l., 95100 Catania (IT)
(72) Inventor: Urzi, Ignazio Antonino, 38340, VOREPPE (FR); Mangano, Daniele, 98163, MESSINA (IT)
(74) Representative: Driver, Virginia Rozanne

(57) **Abstract**

An arrangement is provided. The arrangement comprises at least one source of requests and also comprises an interconnect for routing said requests and respective responses to said requests to and from said at least one source. The arrangement further comprises at least one transaction reordering arrangement configured to reorder said responses such that said responses are provided to a respective source in an order which corresponds to an order in which the requests are issued by said respective source. A respective transaction reordering arrangement is associated with a respective source.

## Description

The present invention relates to an arrangement and in particular but not exclusively to an arrangement in an integrated circuit which is able to provide reordering transactions.

Known integrated circuits may be provided with a plurality of masters which are configured to issue transaction requests. These transaction requests are then sent to a respective slave configured to provide responses to the respective requests. Some protocols require that a given master receive respective responses in the same order as the requests were issued.

In order to satisfy this requirement of the protocol, slaves may be required to process the requests in the order in which they were requested so that responses generated will be in the appropriate order. Slaves are often capable of functioning in a more efficient manner when processing requests in a different order to the order of the requests. Therefore the protocol requirement of the masters having to receive responses in the order in which they were requested may adversely affect the efficiency of the integrated circuit.

According to a first aspect of the present application, there is provided an arrangement comprising: at least one source of requests; an interconnect for routing said requests and respective responses to said requests to and from said at least one source; and at least one transaction reordering arrangement configured to reorder said responses such that said responses are provided to a respective source in an order which corresponds to an order in which the requests are issued by said respective source, a respective transaction reordering arrangement being associated with a respective source.

The arrangement may comprise at least one destination for said requests, said at least one destination configured to provide said respective responses to said requests.

The at least one transaction reordering arrangement may be provided by said interconnect.

The transaction reordering arrangement may be provided by an interface between said at least one source and said interconnect.

At least two of said sources may be configured to use different protocols.

The transaction reordering arrangement for at least two of said different sources may have substantially the same configuration.

The transaction reordering arrangement may be configured to have a first interface configured to receive requests from a respective source and to output respective responses to said respective source and a second interface configured to output said requests received by said first interface to said interconnect and to receive respective responses from said interconnect for outputting of said responses by the first interface.

The arrangement may be configured to operate such that said requests are processable in an out of order manner when said requests are output by said second interface.

The arrangement may be configured to operate such that said responses are output in said order by said first interface.

The arrangement may comprise a memory scheduler, said memory scheduler configured to reorder said requests for access to a responder comprising a memory.

The memory scheduler may be configured to provide said responses to said interconnect out of order with respect to said order.

The interface may be connected to a plurality of subsystems, each sub system comprising at least one responder, wherein each of said subsystems is configured to able to process said requests out of order and to provide said responses out of order to said interconnect.

The transaction reordering arrangement may comprise a queue.

The arrangement may comprise a controller configured to control the position in said queue into which said responses are written such that that said responses are read out of said queue in said order.

According to a second aspect there is provided an integrated circuit comprising an arrangement comprising: at least one source of requests; at least one destination for said requests, said at least one destination configured to provide respective responses to said requests; an interconnect for routing said requests and said responses to and from said at least one source; and at least one transaction reordering arrangement configured to reorder said responses such that said responses are provided to a respective source in an order which corresponds to an order in which the requests are issued by said respective source, a respective transaction reordering arrangement being associated with a respective source.

For a better understanding of some embodiments, reference will be made by way of example only to the accompanying drawings in which:
Figure 1 shows schematically part of an integrated circuit;
Figure 2 shows schematically a transaction reordering unit;
Figure 3 shows the transaction reordering unit of Figure 2, with some of the signals;
Figure 4 shows the transaction reordering unit of Figure 2 in more detail;
Figure 5 shows one example of a queue structure;
Figure 6 shows schematically architecture used in an integrated circuit; and
Figure 7 shows schematically a second architecture used in an integrated circuit.

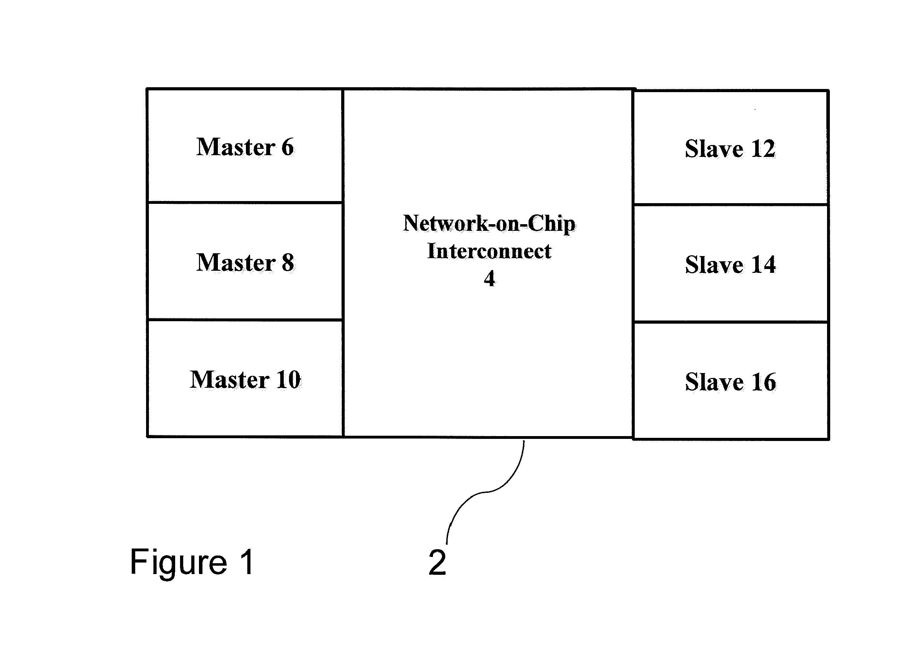

Reference is made to Figure 1 which shows schematically part of an integrated circuit 2. The integrated circuit 2 is provided with a Network-on-Chip NoC interconnect 4. Attached to the NoC interconnect 4 is a first master 6, a second master 8 and a third master 10. The first master 6 is arranged to communicate via the Network-on-Chip interconnect 4 with a first slave 12. Likewise the second and third masters 8 and 10 are configured to communicate with second and third slaves 14 and 16 respectively via the NoC interconnect 4. In some arrangements, a master may communicate with more than one slave. In some arrangements, more than one master may communicate with the same slave.

In a system-on-chip SoC, performance in a communication between components may be addressed in order to implement advanced functionalities in application domains such as home digital video, set-top-box, HD TV (high definition television), 3D TV (three dimensional television), mobile and multimedia applications. It should be appreciated that some embodiments may be used in such SoCs. It should be appreciated that some of the embodiments may be used in different application domains to these specific examples.

Embodiments may be incorporated in one or more functional blocks, IP blocks, subsystems of coupled blocks or one or more integrated circuits. Embodiments may be provided in: set-top boxes; mobile phones; communication devices; computers; PCs; lap-tops; video equipment such as a DVD or CD player/recorder; media player/recorders; TVs; note books; smart phones; PDAs; or user equipment.

In some embodiments, IP cores or IP blocks are used. IP cores or blocks are reusable blocks which may be associated with some intellectual property of a party. Typically, these so-called IP blocks are reused and potentially licensed from different companies. There may of course be other reusable blocks which have no IP associated therewith. This reuse methodology is used by system-on-chip providers in order to facilitate the design of integrated circuits. However this may mean that two or more blocks on the same integrated circuit may be using different protocols and interfaces.

Generally, the interconnects may have to ensure the order of at least some response transactions is the same order as requested by the respective masters. These response transactions may be responses to requests each marked with a same identifier and issued by the same master. By way of example only, the protocols may include a manufacturers own proprietary protocol, OCP (open core protocol), or AMBA AXI (Advanced Microcontroller Bus Architecture - advanced extensible interface). These three protocols are given by way of example only and it should be appreciated that alternative embodiments may use any alternative or additional protocols.

With reference to Figure 1, three masters are shown by way of example only. These masters can be considered to be initiators. Likewise, three slaves are shown. These slaves can be regarded as targets. In the example shown in Figure 1, the masters and slaves communicate via the Network-on-Chip interconnect 4. In the example shown in Figure 1, different ones of the masters and slaves use different protocols. The NoC interconnect 4 is configured to convert the traffic generated by the masters and slaves into a NoC protocol. It is sometimes referred to as the system "common" language. This function may be carried out by network interface components of the NoC interconnect. These components are not shown in Figure 1.

The NoC interconnect 4 usually has to guarantee that the protocol constraints are met for all of the blocks. This requires the ordering of the response traffic. Some protocols such as AMBA AXI or OCP are based on the assumption that at least some response transactions are delivered to a respective master in the same order as the request transactions are issued by that master.

To meet this requirement, in some embodiments, it has been proposed that the interconnects and slaves deal with filtering and/or reordering. Filtering aims at preventing out of order whilst reordering aims at recovering out of order conditions. In some embodiments, to provide improved performance, reordering is applied and filtering is avoided. However, in some embodiments this may mean that there is a large cost in terms of hardware complexity. Some circuits performing reordering may introduce degradation in clock operation frequency which effects performance.

Some arrangements make use of both reordering at the slave side and filtering. However, this may have disadvantages in that there may be a strong dependency on the specific system architecture, interconnect topology, protocols, block behaviour, etc.

Accordingly, as will be described below, further embodiments may address one or more of the following: performance limitations; hardware complexity; and non-agnostic interconnect architecture. This latter issue may affect productivity and time to market because each time a new product is developed, the designers may have to deal with the order constraint, the architecture being arranged so as to avoid an out of order condition for a series of transactions.

Some embodiments allow the transactions to be processed out of order and a reordering mechanism may be provided at the interconnect level either in front of the initiator or at a suitable point within the interconnect.

As mentioned, two options for dealing with ordering constraints are filtering and reordering. Filtering may mean that it is not possible to fully exploit potential advantages of changing the order of accesses to the DDR (double data rate) memory subsystem. In some embodiments, a system-on-chip may have a performance improvement which can be achieved by changing the order of access to the DDR memory subsystem.

Accordingly, in some embodiments, only reordering is used. Some reordering circuitry for example arrangements based on an associative approach using content addressable memory (CAM) architecture may be complex and limit the operation of clock frequency.. As will be described below, some embodiments may provide a hardware solution which is able to provide reordering without the disadvantages of for example CAM based approaches.

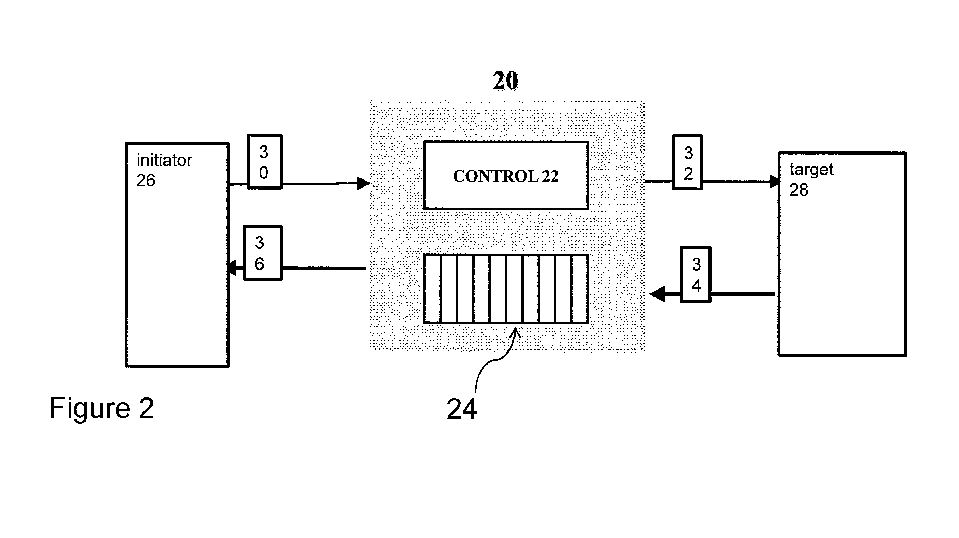

Some embodiments have a reordering mechanism provided by a transaction reordering unit (TRU). In this regard, reference is made to Figures 2 to 5 which show a TRU according to some embodiments. The TRU of some embodiments is configured to manage a reordering queue using a virtual index mechanism. The TRU may be configured to map virtual indexes on a dedicated protocol signal to be propagated through the interconnect 4 with request traffic and retrieved back by the interconnect on the response interfaces.

The arrangement shown in Figure 2 comprises a TRU 20. The TRU 20 comprises a controller 22 and a queue 24. The TRU 20 is placed between an initiator 26 and a corresponding target 28. In the context of the arrangement shown in Figure 1, the initiator 26 may be one of the masters and the target 28 may be one of the slaves. However, it should be appreciated that embodiments can be used with any appropriate initiator and responder.

The queue 24 has N locations and is arranged on the response path. Each queue location has a queue locator index. The response is provided by the target 28, in response to a request from the initiator 26. A virtual index is associated with each queue location. Both the queue locator index and the virtual index are numbered from 0 to N-1. The initiator 26 is arranged to issue request transactions 30 which are sent to the TRU 20. The controller 22 of the TRU 20 establishes in which virtual location a corresponding response transaction has to be placed when that corresponding response is received by the TRU 20. The number of locations required to store the response transaction may be dependent on the transaction size. The location may be determined according to an incremental approach. Starting from previous information, a virtual index will be associated with the request transaction and will be sent with the transaction itself. In other words, the TRU will send the issued request transaction, received from the initiator 26, to the target 28 with the addition of the virtual index. The target 28 is configured to process the request and provide a response thereto. The response transaction will include the virtual index which has been added by the TRU 20. The response 30 is received by the TRU. That response will be placed in the queue in the associated location identified by the virtual index of the response transaction itself.

When information or data is written into the queue head, that data or information is sent out and at the same time the remaining queue content is shifted left in the arrangement of Figure 2. When the TRU is first used, virtual location X (virtual index X) will correspond to physical location X (queue location index X) of the queue. However, after having done K shifts of the queue content, virtual location X (virtual index X) will be associated with physical location X-K (queue location index X-K). The queue head is always at the location which corresponds to physical location 0 regardless of how many shifts have been performed. The number of shifts K is wrapped according to the queue size. For example, if the queue has N=16 locations, K will be incremented from 0 to 15 in a circular fashion, e.g. 0, 1, 2... 15, 0, 1,...

The controller 22 of the TRU is configured to stop request traffic flow if there is not enough room in the queue to contain the response to the current request transaction. Thus, the arrangement shown in Figure 2 allows the response transactions output by the TRU 20 to be in the same order as the requests from the respective initiator 26. In some embodiments, the queue structure used in the TRU may not require an associative approach as reading is always performed from the head as with a traditional FIFO (first in first out) and writing can be done at every location.

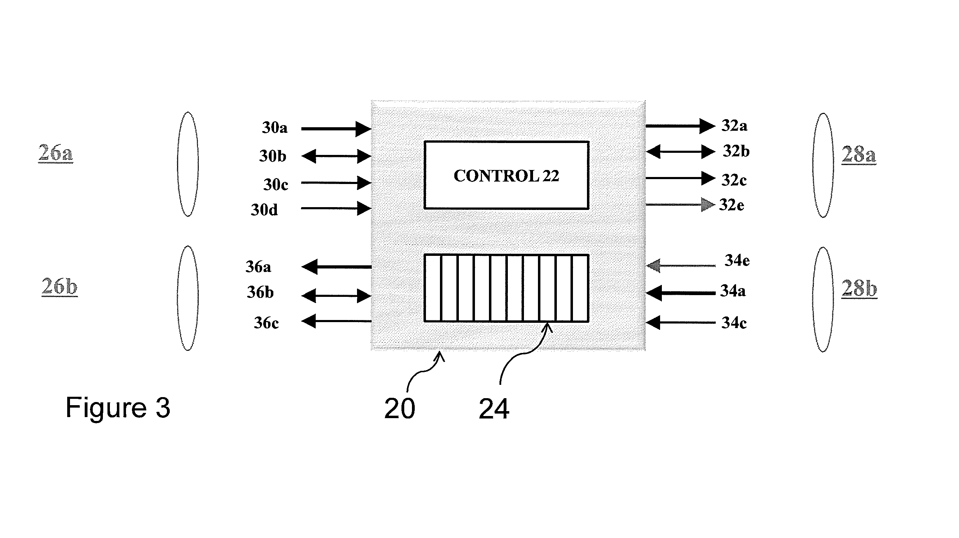

Reference is now made to Figure 3 which shows the signalling of the arrangement of Figure 2 in more detail. In particular, in Figure 3, four interfaces are shown. A request initiator interface 26a and a response initiator interface 26b are shown on the initiator side and represent the master. These two interfaces 26a and 26b may define the interface with the source. A request target interface 28a and a response target interface 28b are shown for the responder 28 and correspond to the slave block. The request target interface and target response interface may define an interface to the target.

The request and response interfaces on each side may be separate interfaces or may be provided by a common interface which provides the request and response interface functions.

The four interfaces shown are configured to be independent of the protocol. For this reason, the TRU 20 may be completely protocol agnostic. In other words, the TRU 20 may be used with a number of different protocols without specific modification.

The information which is part of the transaction requests is shown in more detail in Figure 3. The transaction request comprises data 30a, flow control signals 30b, end of transaction signal 30c and transaction size information 30d. Flow control signals are generally used by protocols and may be request/grant signals. The end of transaction signal will indicate the end of the transaction whilst the transaction size information provides the transaction size. This information shown in Figure 3 is typically provided in a number of protocols. The information which is sent by the TRU 20 to the request target interface 28a comprises data 32a, flow control signals 32b, end of transaction information 32c and the virtual index 32d. As mentioned previously, the virtual index is associated with a particular transaction and is added to the transaction by the controller 22. The virtual index is transported with the transaction by the interconnect.

The response target interface provides a response transaction comprising data 34a, end of transaction information 34c and the index information 34d which is provided in or with the request transaction.

The TRU provides a response to the response initiator interface 26b comprising data 36a, flow control signals 36b and end of transaction information 36c. The virtual index has been removed from the response by the TRU.

Protocols generally have some user defined signals which can be employed to describe transport custom information. In some embodiments, the virtual index is provided in one of these user defined fields. In alternative embodiments, the virtual index may be mapped onto the protocol signal used to identify the master. In other words the source identity part of the signalling may be modified to include the virtual index additionally or alternatively. Before the response transaction is sent by the TRU to the initiator, the source identity part is modified back to its original value. It should be appreciated that the virtual index can be added to the request transaction at any other suitable location, with the TRU removing the virtual index information in the response transaction before sending that response back to the initiator.

The controller 22 is configured to handle the response queue writing and reading, manage the flow control on all the interfaces and generate the virtual indexes.

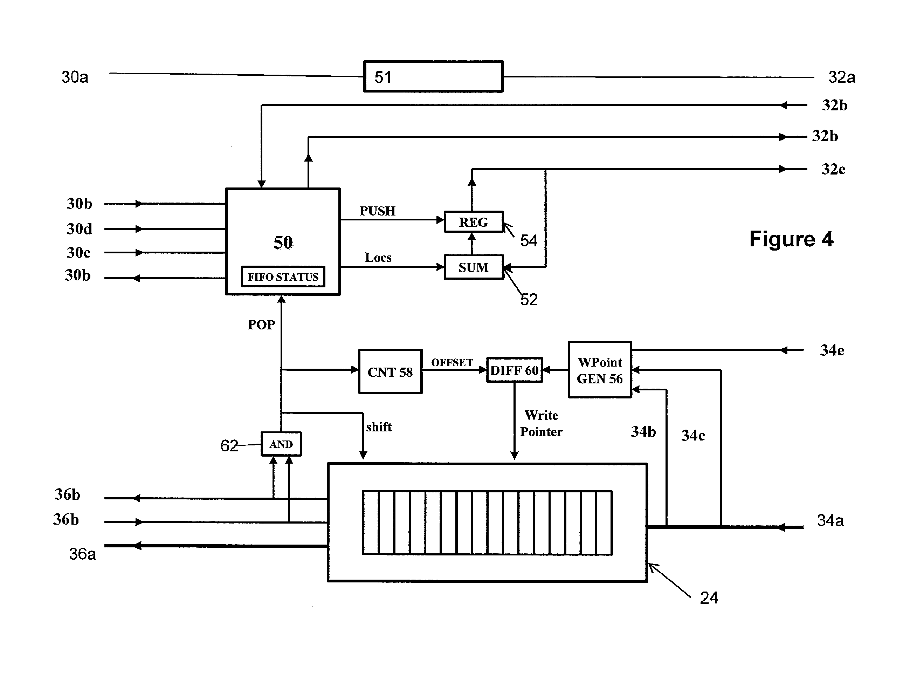

Reference is now made to Figure 4 which shows in more detail the TRU unit. In the arrangement shown in Figure 4, the controller comprises a FIFO allocator 50. The FIFO allocator may take any suitable form and may for example be a state machine.

The FIFO allocator 50 handles the control of the master and slave interfaces and generates the virtual indexes for association with the request transactions. The flow allocator also manages a state variable to know at each point in time the available room in the response queue.

If the size required for the response to the request transaction (determined from the size signal 30d) received on the master request interface is smaller than the room in the queue, the whole transaction will be granted and a grant signal 30 is asserted by the FIFO allocator. The transaction may have a request signal 30b. The request and grant signals 30b are flow control signals. The grant signal is provided from the FIFO allocator 50 to the request initiator interface. The FIFO allocator 50 is arranged to receive the request data 30a, and the end of transaction (EOT) signal 30c. The end of transaction signal may be an end of packet signal.

If the request transaction is smaller than the room in the queue, a push signal will be asserted and the number of locations needed to contain the response to the previous request transaction is set on the Locs signal. The virtual index to be associated with the current request transaction is the sum of the previous virtual index allocated to the preceding request and the number of locations consumed by the previous transaction. This calculation is performed by sum block 52. A register 54 is provided. The register 54 is arranged to receive the PUSH signal output from the FIFO allocator and the output from the sum block 52. The output from the sum block is the virtual index for the received transaction and the PUSH signal causes the virtual index to be output from the register to accompany the transaction. The register 54 is configured so that the virtual index is mapped onto the target signal the clock cycle after the PUSH signal to be asserted. The EOT signal 30c allows the FIFO allocator 50 to identify the end of a transaction and to thereby identify the next transaction as a new transaction.

The data of the transaction is received by a register 51 which holds the data and then outputs the data at the same time as the virtual index. The request data on the slave side is the retimed version of the request data on the master side.

In one embodiment, the same virtual index is used for all parts of the same transaction. However, in some alternative embodiments, different parts of the same transaction may have a different virtual index, with the virtual index for the parts being incremented by one.

The FIFO allocator 50 is also configured to generate the transaction request signal which is presented to the target and also to receive the target grant signal from the target. These signals may be the flow control signals of Figure 3.

The controller also comprises a write point generator 56 which controls a generation of the pointer used for writing to the queue. On the first response transaction it propagates the received virtual index. The write point generator also receives the end of transaction data 34c and the request flow control signal 34b. For subsequent transactions, the write point generator increments the previous point by one. Thus transaction k will have the pointer value equal to the virtual index plus k. It should be appreciated that where elements or parts of a transaction have their own virtual index, the write pointer will be incremented for each element of the transaction.

The counter block 58 and difference block 60 are provided in order to manage the association between the virtual index and the physical queue index. At the beginning, the queue 24 is empty and the counter 58 is set to 0. The offset value provided by the counter 58 to the difference block will be 0. The output of the write pointer generator is input to the difference block. The output of the difference block 60 provides the write pointer. Initially the write pointer has a value generated by the write point generator. In this case, the virtual queue location will correspond to the physical one. After a transaction or a transaction element has been read from the queue, the counter output is equal to the number of read operations and provides an offset value. The difference block 50 calculates the write pointer as the difference between the write pointer output and the offset provided by the counter 58. In this way, the virtual location X can be associated with the physical location X-K as discussed previously. It should be appreciated that the response data is written into the queue at the location to which the write pointer points.

Offset wrapping is provided by the counter 58. When an element is read from the queue, an output is provided to both the counter 58 and the FIFO allocator 50. An AND gate 62 is provided between the output of the queue on the one hand and the FIFO allocator and the counter on the other hand. The output of the AND gate also provides the queue shift signal. The AND gate receives the request and grant signals. When both of these signals are asserted, this means that an element has been read from the queue. The FIFO allocator will update its internal FIFO status. The queue is shifted as the shift signal output by the AND gate 62 is asserted. The output of the queue comprises the response data 36a.

As mentioned previously, the same virtual index may be associated with all elements of a transaction or different elements of a transaction may have different indexes. In the latter case, the logic used to handle the queue write pointer would also need to be modified.

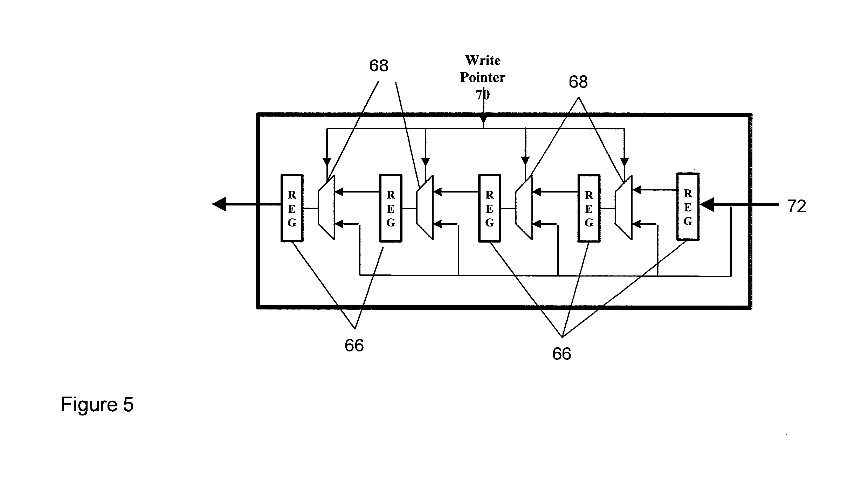

Reference is made to Figure 5 which shows one example of a queue which can be used in embodiments of the present invention. In a preferred embodiment, the FIFO queue comprises n registers 66 and n multiplexors 68 where n is the queue size. Each multiplexor 68 is arranged to receive a control signal from the write pointer. Each multiplexor 68 is coupled on its output to an associated register 66 which represents the queue storage location. Each multiplexor 68 is arranged to be coupled on one of its inputs to the received data. Each multiplexor 68 is configured to be coupled to the preceding register. Data which is received from the target is written into one of the registers. This will be controlled by the write pointer which will cause one of the multiplexors to write the received data into the correct queue location (i.e. register). When the data in the register 66 at the top of the queue is read out, the multiplexors 68 are configured to allow the data in the registers connected or coupled to their input to be output to the next register 66. In this way the data is shifted through the queue one position at a time as the data is read out.

The arrangement shown in Figure 5 comprises one example of a queue structure which may be used in embodiments. In alternative embodiments, other structures may be used.

It should be appreciated that the master may in some embodiments alternatively be any other source of transactions. Likewise in some embodiments, the slave may alternatively be any other target for transactions.

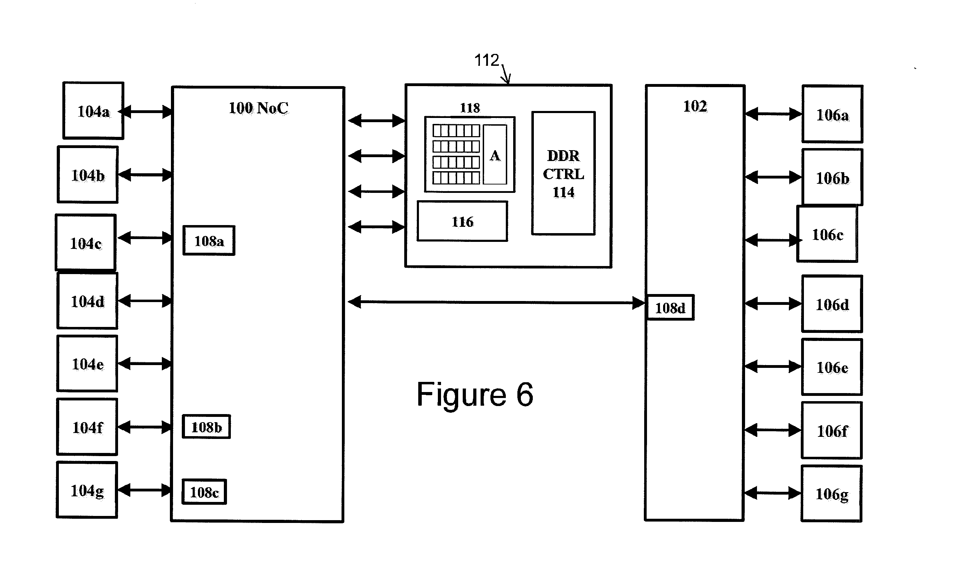

Reference is now made to Figures 6 which shows a system architecture used in an integrated circuit approach. In the architecture of Figure 6 a NoC environment 100 is provided. The NoC environment is coupled to masters 104a to 104g. The masters may comprise one or more of the following masters in addition to or instead of the masters mentioned earlier:
CPU (central processing unit); decoder; transport stream unit; encoder; video data processor; and graphic processing unit.

The masters 104a to 104g are arranged to be coupled to the NoC environment 100. The NoC environment 100 is coupled to a bus or circuit switched environment 102. The bus 102 is coupled to slaves 106a to 106g. The slaves comprise one or more of the following slaves in addition to or instead of the slaves mentioned earlier:
External memory interface; peripheral component interface; memory; RAM, registers; target TRG.
As mentioned previously, the different masters may use different protocols.

A memory controller 112 is provided which is coupled to the NoC environment for ensuring the reordering of responses to requests. The memory controller 112 is used to access an external memory and has a memory scheduler 118 and DDR controller 114. For improved memory performance, the transactions may be presented out of order to the memory. In this example, the memory is a target that receives requests from an initiator. A response FIFO 116 is provided which is arranged to reorder the responses to the requests.

The memory scheduler 118 in some embodiments schedules the received requests to be serviced by the external memory in an order with the greatest efficiency for the memory. The response FIFO can therefore in such embodiments store the responses generated by the external memory in the order in which the corresponding requests were received by the memory scheduler. The reordering is therefore carried out at the target side. The reordering corresponds to order in which the requests were received.

As the reordering is done at the target side each master 104a to g waits for the completion of previous requests. However, this reordering at scheduler level may affect latency for the masters. It may then be better to stall single masters independently rather than reordering at the scheduler level.

As can be seen, some of the masters have filters 108a to c associated therewith. As mentioned each master may operate according to a different protocol, for example, 104c may operate in accordance with a proprietor's own protocol while master 104f may operate in accordance with OCP (open core protocol) and master 104g operates in accordance with AMBA AXI (Advanced Microcontroller Bus Architecture - advanced extensible interface). Once again, it will be appreciated that this is by way of example only.

Each protocol can have its own reordering requirements of which filters 108a, 108b and 108c can respectively carry out. A bus transaction issued by the master may include an address (to identify a target) and an source/identifier src/id in a request. Each filter 108a to c determines whether to block a request until the response to a previous request is received based on the target and src/id in the request. For example certain requests may not have an in-order requirement and the filter will allow those requests through before the response to a previous request has been received. Other requests may be required in order and the filter may only pass the request through when a response to a previous request has been received.

For example filter 108a may pass a first request with an identifier '7' to target 106b from master 104c. A next request from master 104c may be for target 106g with an identifier of '7'. The filter may block this request until the response for the previous request is received because both requests have the same identifier '7'. A third request may be for target 106a with an identifier of '8' will be passed through the filter as there is no requirement with this identifier for in-order operation.

In this manner, the filters 108a - c prevent the issuance of at least some requests until the response to the previous transaction has been received. A filter 108d may be provided in the bus 102 for maintaining the order of the received transactions from the NoC interconnect 100. These filters may limit the performance of those blocks where performance gains are provided by the out of order processing of transactions.

This may lead to different side effects such us system latency increase, drop of efficiency on memory interfaces, drop of efficiency on interconnect.

Some embodiments may address or mitigate one or more of the above issues by means of a system architecture which allows slaves and interconnect to work in a full out of order context. Such an approach may remove the need to perform filtering at interconnect level on request traffic and to implement reordering mechanism at slaves level.

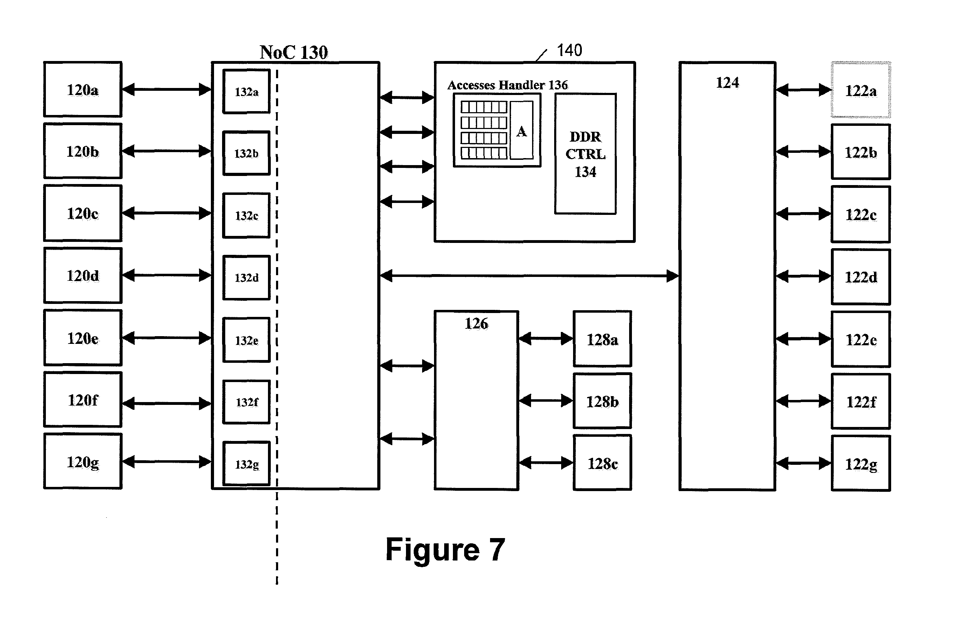

Reference is made to Figure 7 which shows an architecture according to an improved embodiment. As with the arrangement shown in Figure 6, a number of masters 120a-g and slaves 122a-g may be provided. The masters may comprise one or more of the masters mentioned previously or any other master. The slaves may comprise one or more of the slaves mentioned previously or any other slave.

The masters are again arranged to send request transactions to a NoC interconnect 130 and receive responses thereto via the NoC interconnect. The NoC interconnect 130 is coupled to a circuit switched environment or a bus 124. The slaves are coupled to the bus to receive request from the bus and put responses to the requests onto the bus.

In the arrangement of Figure 7, a second subsystem comprises a further bus 126 which to which first to third slaves 128a-c are coupled. The second subsystem operates in a similar manner to the first subsystem defined by the bus 124 and the slaves coupled thereto.

As with the arrangement of Figure 6, a controller 140 is provided for controlling access to a memory (the responder). The controller 140 has a request access scheduler 136 which is configured to control the order in which the requests are presented in order to improve the operating efficiency of the memory. The DDR controller 134 controls access to the memory in accordance with the scheduling of the request access scheduler.

As compared to the arrangement of Figure 6, the controller 140 does not require a reordering FIFO or any other reordering functionality. The filters provided in the NoC and the bus are also omitted. In contrast a TRU 132a-g is provided for each master. Thus each master has its own TRU. Alternatively masters operating with the same protocol may share a TRU.

The TRUs 132 may be as previously described or may have a different construction. The TRUs may be provided in the interface with the NoC interconnect or in the NoC itself. The TRUs 132 are configured to reorder the responses to the requests such that they are provided to the master in the same orders as the corresponding requests. This means that on the side or interface of the TRU which communicates with the master order is maintained. On the side or interface of the TRU which outputs the requests to be routed to the slaves, an out of order environment is provided.

Thus, in some embodiments, some limitations on the memory subsystem may be removed achieving then a performance improvement in terms of bandwidth and latency.

In some embodiments of the application such as the embodiment shown in figure 7, there is no need to filter request traffic. At a DMA level, some embodiments may break the link in between src/id allocation and targets thus improving performances. In some embodiments parallel accesses on multiple targets even for single src masters or AXI transactions using same ID may be achieved. In these embodiments, there may be no need to filter request traffic in the NoC and it may be possible to parallelize execution of transactions, whatever the ID nature of a particular protocol, on multiple slaves.

Some embodiments may ease QoS in NoC-based systems as requests disorder is permitted to support features such as virtual channels, dynamic multi-path, etc. Virtual channels may provide a virtual path between a initiator and target for high priority requests and require a full out of order operation.

In some embodiments the masters are fully decoupled from the rest of the integrated circuit. This may means that designs may be easier to reuse and simpler design (time-to-market) may be achieved. In some embodiments there is no need to provide ordering in the slaves. For example no reordering tasks may be imposed on the slaves which may lead to one or more of the following advantages: system latency reduction, memory efficiency increase, and bandwidth increase.

The TRU may replace already embedded FIFOs on a requester's bus interface and also act as a reordering unit without requiring any additional silicon area.

It should be appreciated that in some embodiments, the previously described transaction unit may be used in the system shown in Figure 7. However, it should be appreciated that in alternative embodiments of the invention, the transaction reordering unit can be provided by any other suitable unit including any of the currently known reordering units.

It should be appreciated that in some embodiments of the invention, the transaction reordering unit of Figures 2 to 5 may be used in positions other than that described in relation to Figure 7. For example the transaction reordering unit may be used in the access handler block of Figure 6 or at any other suitable position in the integrated circuit.

In the above described arrangements, reference has been made to a transaction reordering unit. However, these transaction reordering units are only some examples of a transaction reordering arrangement of some embodiments of the invention. In alternative embodiments of the invention, the transaction reordering arrangement may take any other suitable form.

In some embodiments of the invention, the requests issued by a source may be a transaction, an element of a transaction or any other suitable request.

The source may be a master or any other suitable source of requests. The destination of the requests may be a slave or any other suitable destination.

Although the requestors or masters of the foregoing description have been described using different protocols, it will be appreciated that they may use the same protocol. In embodiments some requestors may have the same protocol and others different protocol.

It will be appreciated the protocol used by a masters may determine the order in which responses to the requests may be received. This protocol may be a bus protocol.

It will be appreciated that the integrated circuit of the foregoing may be replaced by any suitable arrangement. It will be appreciated that the transaction reordering unit of the foregoing description may be replaced by any suitable transaction reordering arrangement. It will be appreciated that the network on chip of the foregoing may be any suitable interconnect. It will be appreciated that the master or requestors of the foregoing description may be any suitable source and that the slave may be any suitable responder.
Whilst this detailed description has set forth some embodiments of the present invention, the appended claims cover other embodiments of the present invention which differ from the described embodiments according to various modifications and improvements. Other applications and configurations may be apparent to the person skilled in the art.

## Claims

1. An arrangement comprising:
at least one source of requests;
an interconnect for routing said requests and respective responses to said requests to and from said at least one source; and
at least one transaction reordering arrangement configured to reorder said responses such that said responses are provided to a respective source in an order which corresponds to an order in which the requests are issued by said respective source, a respective transaction reordering arrangement being associated with a respective source.

2. An arrangement as claimed in claim 1 further comprising:
at least one destination for said requests, said at least one destination configured to provide said respective responses to said requests.

3. An arrangement as claimed in any preceding claim, wherein said at least one transaction reordering arrangement is provided by said interconnect.

4. An arrangement as claimed in any preceding claim, wherein said transaction reordering arrangement is provided by an interface between said at least one source and said interconnect.

5. An arrangement as claimed in any preceding claim, wherein at least two of said sources is configured to use different protocols.

6. An arrangement as claimed in any preceding claim, wherein said transaction reordering arrangement for at least two of said different sources have substantially the same configuration.

7. An arrangement as claimed in any preceding claim, wherein said at least one transaction reordering arrangement is configured to have a first interface configured to receive requests from a respective source and to output respective responses to said respective source and a second interface configured to output said requests received by said first interface to said interconnect and to receive respective responses from said interconnect for outputting of said responses by the first interface.

8. An arrangement as claimed in claim 7 wherein said arrangement is configured to operate such that said requests are processable in an out of order manner when said requests are output by said second interface.

9. An arrangement as claimed in claim 7 or 8, wherein said arrangement is configured to operate such that said responses are output in said order by said first interface.

10. An arrangement as claimed in any preceding claim, comprising a memory scheduler, said memory scheduler configured to reorder said requests for access to a responder comprising a memory.

11. An arrangement as claimed in claim 10, wherein said memory scheduler is configured to provide said responses to said interconnect out of order with respect to said order.

12. An arrangement as claimed in any preceding claim, wherein said interface is connected to a plurality of subsystems, each sub system comprising at least one responder, wherein each of said subsystems is configured to able to process said requests out of order and to provide said responses out of order to said interconnect.

13. An arrangement as claimed in any preceding claim, wherein said at least one transaction reordering arrangement comprises a queue.

14. An arrangement as claimed in claim 13, wherein said at least one transaction reordering arrangement comprises a controller configured to control the position in said queue into which said responses are written such that that said responses are read out of said queue in said order.

15. An integrated circuit comprising an arrangement as claimed in any preceding claim.
